(19) Europäisches Patentamt
European Patent Office
Office européen des brevets

(11) Publication number: 0 143 547
A1

(12) # EUROPEAN PATENT APPLICATION

(21) Application number: 84307319.8

(22) Date of filing: 24.10.84

(51) Int. Cl.⁴: **A 01 N 57/20**, A 01 N 57/22
//
(A01N57/22, 33:22, 57:20, 33:22)

(30) Priority: 28.10.83 US 546239

(43) Date of publication of application: 05.06.85
Bulletin 85/23

(84) Designated Contracting States: DE FR GB

(71) Applicant: CHEVRON RESEARCH COMPANY,
525 Market Street, San Francisco California 94120 (US)

(72) Inventor: Coltharp, J. Lawrence, 789 Condor Drive,
Martinez California 94553 (US)
Inventor: Mitchell, Michael, Route 22 Box 465, Ryler
Texas 75709 (US)

(74) Representative: Kosmin, Gerald Emmanuel et al,
HASELTINE, LAKE & CO. Hazlitt House 28 Southampton
Buildings Chancery Lane, London, WC2A 1AT (GB)

(54) **Glyphosate-type herbicidal compositions and their use.**

(57) Glyphosate-type herbicidal compositions incorporating a minor amount of an oxyfluorfen-type herbicide exhibit enhanced phytotoxic efficacy and an increased speed of phytotoxic action as compared with glyphosates alone and are useful in home and garden-type herbicidal applications. Such compositions also exhibit excellent residual activity and are especially useful in applications where no regrowth is desired, such as along a fence line.

# GLYPHOSATE-TYPE HERBICIDAL COMPOSITIONS AND THEIR USE

This invention relates to improved glyphosate-type herbicidal compositions. Glyphosate (N-phosphonomethyl glycine) and its salts are well-known broad spectrum herbicides active against both annual and perennial weeds. This class of herbicides is especially known for its post-emergent herbicidal effectiveness against grasses and is used for both large scale agricultural applications and also for home and garden type applications.

For home and garden applications the glyphosate herbicides suffer the disadvantage that they are relatively slow acting especially against certain difficult to kill weed and grass species, such as Bermuda grass. Thus, the common home and garden purchaser is frequently prone to use repeated applications of the herbicide where only one applicaton is necessary because they have failed to see any change in the weeds or undesired vegetation within the first few days or week. This problem is even more accentuated because the glyphosates act more effectively against mature plants than against young plants and most home and garden weed clean-up is done in the early growing season and hence against young plants.

An extensive review of Glyphosate and Related Chemistry is set forth by J. E. Franz in IUPAC-Advances in Pesticide Chemistry; Gassbühler Ed. (1978-Zurich).

The synthesis and/or use of glyphosate-type herbicides is described in U.S. Patents Nos. 3,799,758; 3,835,000; 3,868,407; 3,950,402; 4,083,893; 4,147,719 and European Patent Application No. 19,384. U.S. Patent No. 3,929,450 teaches that the herbicidal effectiveness of N-phosphonomethyl glycines can be increased by applying them with certain N-phosphonic acids. Farm Chemicals Handbook (1982) at page C-254 teaches that the isopropylamine salt of glyphosate may be tank mixed with Lasso atrazine, Princep , Lorox , Lexone and Sencor for use in

certain minimum tillage systems. It has also been suggested to tank-mix trifluralin (i.e., 1-trifluoromethyl-3,5-dinitro-4-dipropylaminobenzene) with the isopropylamine salt of glyphosate. The words "Lasso", "Princep" and "Lorox" are Trade Marks.

Acifluorfen, (i.e. 5-[2-chloro-4-(trifluoromethyl)phenoxy]-2-nitrobenzoic acid) and its salts, are well-known agricultural herbicides which may be applied for selective pre- and post-emergence control of annual broad leaf weeds and grasses in agricultural crops such as soybeans, peanuts, and other large-seeded legumes. These herbicides are generally more active against broad leaf weeds than grasses and are principally applied as post-emergent herbicides. The preparation and use of such herbicides are described in U.S. Patent No. 4,063,929. This patent also generally teaches that such herbicides can be applied in combination with other herbicides including a number of herbicides described in columns 6, 7 and 8 thereof.

Oxyfluorfen [i.e. 2-chloro-1-(3-ethoxy-4-nitrophenoxy)-4-(trifluoromethyl)benzene] is another diphenyl ether-type agricultural herbicide designed for pre- and post-emergence control of a number of species of broad leaf weeds and grasses in crops such as soybean, corn, cotton, etc. (see Farm Chemicals Handbook (1981) p. C-165).

Bifenox [i.e. methyl-5-(2,4-dichlorophenyloxy)-2-nitrobenzoate) is designed for pre- and post-agricultural herbicide applications particularly for broad leaf control. It has also been suggested to use bifenox in overlay with trifluralin, paraquats or the isopropylamine salt of glyphosate (see Farm Chemicals Handbook (1981) p. C-226).

Other diphenyl ether herbicides include nitrofen (i.e., 2,4-dichlorophenyl-p-nitrophenyl ether) and chlomethoxynil (i.e., 2,4-dichlorophenyl-3-methoxy-4-nitrophenyl ether). Various diphenyl ether-type herbicides are also described in U.S. Patents Nos. 3,652,645; 3,979,437;

4,093,446; 4,164,409; 4,192,669; 4,220,468 and British Patent Specification No. 1,521,472.

It has now been surprisingly discovered that by combining oxyfluorfen-type herbicides with glyphosate-type herbicides, the phytotoxic efficacy and the speed of phytotoxic action are increased. Further, the composition also provides excellent residual control of vegetation. Also, against certain difficult-to-kill weed or grass species, such as Bermuda grass, this increased speed of action is synergistic. Moreover, this enhanced speed of phytotoxic action does not produce any loss in overall effectiveness. This is especially surprising because the overall effectiveness of glyphosates is generally dependent upon a relatively large amount of foliage contact and translocation of glyphosate to the vital organs of the plant, whereas oxyfluorfen-type herbicides are known to cause cell rupture ("burning") and would be expected to reduce translocation, causing poorer overall glyphosate effectiveness, typically manifested by regrowth. Contrary to this, no significant, if any, loss in effectiveness or increased regrowth was observed for the present composition.

For the reasons already noted above, this increased speed of action is especially desirable in home and garden herbicidal applications. Since the herbicidal action will now be more rapidly observable, this in turn should obviate the tendency of the home gardener to use unnecessary repeated applications of the herbicide. In agricultural (large scale) applications the increased speed of action is, of course, desirable but of less importance because of the sophistication of those applying the herbicides and their awareness of the time required for the herbicide to take effect. The excellent residual control exhibited by this composition is especially desirable for applications in which no regrowth is desired such as, for example, along fence lines and the edges of grass landscapes.

According to one aspect of the invention, a herbicidal composition comprises a post-emergent herbicidally effective amount of a glyphosate-type herbicide (as hereinafter defined); an amount of oxyfluorfen and/or a lower alkyl homolog thereof (as hereinafter defined), effective to increase the post-emergence herbicidal speed of phytotoxic action of said glyphosate-type herbicide, and a compatible carrier. The invention also comprises a concentrate formulation comprising the aforementioned glyphosate-type herbicide and oxyfluorfen or homolog thereof.

According to another aspect of the invention, a method of destroying vegetation comprises applying a herbicidally effective amount of a glyphosate-type herbicide in combination with an amount of oxyfluorfen and/or compatible salts thereof, effective to increase the post-emergence herbicidal speed of action of said glyphosate herbicide, to the foliage and/or stems of said vegetation.

Methods of preparing the aforementioned herbicidal compositions are also encompassed within the invention.

The glyphosate-type compounds used in the present invention include compounds represented by Formulae I and Ia hereinbelow and also compounds which are metabolized by green plants to such compounds or more generally, to the phytotoxic functional equivalent of the compounds of Formulae I and Ia .

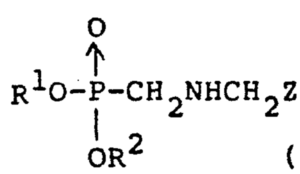

(I)

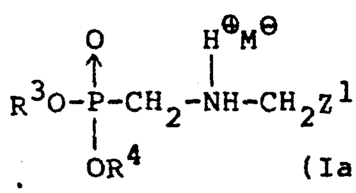

(Ia)

wherein Z is cyano; or the group -COOR wherein R is hydrogen, lower alkyl, lower alkenyl, lower alkoxyalkyl, aryl having 6 to 10 carbon atoms or substituted aryl having 1 to 3 substituents independently selected from lower alkyl, lower alkoxy, halo, trifluoromethyl, nitro, and cyano, or a compatible salt-forming cation;

$R^1$ and $R^2$ are independently hydrogen; lower alkyl; aryl; substituted aryl; biphenyl; or a compatible salt forming cation.

$M^{\ominus}$ is a compatible salt-forming anion;

$R^3$ and $R^4$ are independently hydrogen; lower alkyl; aryl; substituted aryl; or biphenyl; and $Z^1$ is cyano; or -COOR' wherein R' is as defined for R but excluding a salt-forming cation.

With respect to Formulae I and Ia, the preferred compounds are those wherein Z and $Z^1$ are -COOR and -COOR', respectively.

When Z in Formula I is -COOR, R is preferably hydrogen, lower alkyl, lower alkenyl, lower alkoxyalkyl or a compatible salt-forming cation, whilst $R^1$ and $R^2$ are preferably independently hydrogen, lower alkyl, phenyl, substituted phenyl having 1 or 2 substituents selected from alkyl, alkoxy and halo, or a compatible salt-forming cation.

With respect to Formula I, the preferred compounds are those wherein R, $R^1$ and $R^2$ are independently hydrogen or a compatible salt-forming cation. The organic ammonium salts of Formula (I), for example, wherein R is isopropyl amine cation, yield very good results and are commercially available. The organic sulfonium and sulfoxide salts, for example, wherein $R^1$ and/or $R^2$ are trimethyl sulfonium cation or trimethyl sulfoxide cation are also desirable. With respect to Formula Ia, the preferred compounds are those wherein $R^{1'}$ and $R^{2'}$ are independently lower alkyl or aryl and Z' is -COOR' wherein R is lower alkyl or aryl.

Compatible cations and compatible anions refer respectively to cations and anions which yield the salt

form of the compounds of Formula (I) and (Ia), respectively, and which do not significantly adversely affect the herbicidal properties of the compound. Typically, the salt form is more water soluble than the free acid or base form and is hence desirable for formulation and application purposes.

Suitable compatible cations include, for example, cations of alkali metals, e.g. sodium, potassium, alkaline earth metals, e.g. calcium, magnesium; copper, zinc, iron, nickel manganese, ammonium, and organic ammonium cations, organic phosphonium cations and organic sulfonium and sulfoxide cations preferably having molecular weights below about 300. Suitable organic ammonium cations include cations derived from amines, including cyclic and heterocyclic amines containing 1 or 2 amine groups and includes, for example, alkyl amines, alkylene amines, alkene amines, and alkanol amines. Illustrative species of such amines include, for example:

methylamine, ethylamine, n-propylamine, isopropylamine, n-butylamine, isobutylamine, sec-butylamine, n-amylamine, isoamylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, methylethylamine, methylisopropylamine, methyhexylamine, methylnonylamine, methylpentadecylamine, methyloctadecylamine, ethylbutylamine, ethylheptylamine, ethyloctylamine, hexylheptylamine, hexyloctylamine, dimethylamine, diethylamine, di-n-propylamine, diisopropylamine, di-n-amylamine, diisoamylamine, dihexylamine, di-heptylamine, dioxtylamine, trimethylamine, triethylamine, tri-n-propylamine, triisopropylamine, tri-n-butylamine, triisobytylamine, tri-sec-butylamine, tri-n-amylamine, ethanolamine, n-propanolamine, isopropanolamine, diethanolamine, N,N-diethylethanolamine, N-ethylpropanolamine, N-butylethanolamine, allylamine, n-butenyl-2-amine, n-pentenyl-2-amine, 2,3-dimethylbutenyl-2-amine, di-butenyl-2-amine, n-hexenyl-2-amine and propylenediamine, primary aryl amines such as

aniline, methoxyaniline, ethoxyaniline, o,m,p-toluidine, phenylenediamine, 2,4,6-tribromoaniline, benzidine, naphthylamine and o,m,p-chloroaniline; and heterocyclic amines such as pyridine, morpholine, piperidine, pyrrolidine, indoline and azepine.

Suitable organic sulfonium and sulfoxide cations include, for example, $C_1$-$C_{10}$ alkyl, preferably lower alkyl, sulfonium and $C_1$-$C_{10}$ alkyl, preferably lower alkyl, sulfoxide cations, for example, trimethylsulfonium; ethyldimethylsulfonium; tripropylsulfonium; trimethylsulfoxide; and triethylsulfoxide. Suitable procedures for preparing such salts are for example described in U.S. Patent No. 4,315,765. Suitable phosphonium cations include those having the formula

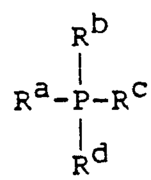

wherein $R^a$, $R^b$, $R^c$ and $R^d$ are independently $C_1$-$C_{10}$ alkyl or phenyl, and preferably are lower alkyl. Suitable procedures for preparing such salts are, for example, described in U.S. Patent No. 4,341,549.

Examples of various suitable cation salt forms are also described in U.S. Patent No. 3,799,758.

Suitable compatible anions include, for example, chloride, bromide, iodide, fluoride, sulfate, sulfite, bisulfite, phosphate, orthophosphate, carbonate, bicarbonate, acetate, butyrate, benzoate, and maleate.

The compounds of Formulae (I) and (Ia) are generally known compounds and can be prepared by known methods, such as, for example, described in U.S. Patents Nos. 3,799,758; 3,835,000; 3,950,402; 4,067,719; 4,008,296; 4,252,554; 4,147,719 and 4,369,142 or by obvious modifications of known procedures.

A wide variety of compounds which are metabolized by green plants or functionally equate to the phytoxic active moiety of glyphosate can be also used. Such compounds include, for example, the compounds

represented by the following formulae (which also encompass the compounds of Formulae I and Ia above):

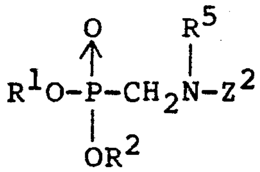
(II)

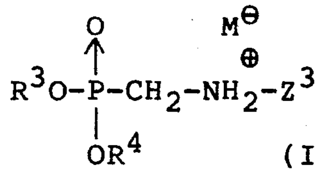
(IIb)

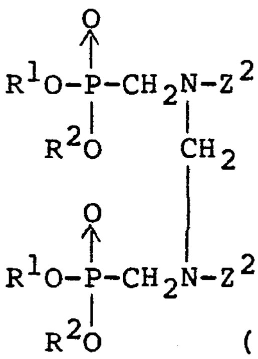
(III)

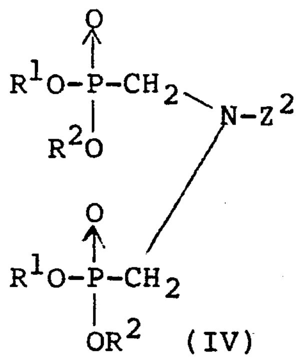
(IV)

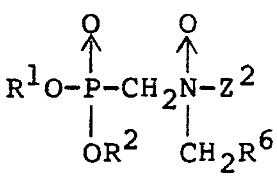
(V)

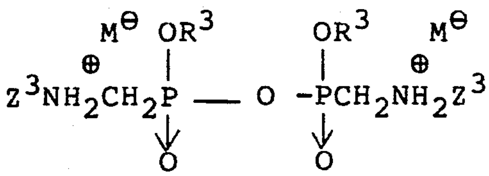
(VI)

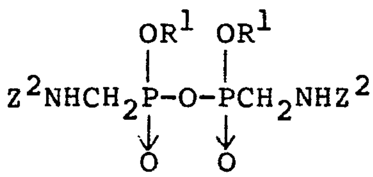
(VII)

wherein M, $R^1$, $R^2$, $R^3$ and $R^4$ are as defined hereinabove;

$Z^2$ is $-CH_2CN$; -CONHOH (or its tautomer, i.e. -C(OH)=NOH); $-CH_2COOR$ wherein R is hydrogen, a compatible salt-forming cation, lower alkyl, lower alkenyl, lower alkoxyalkyl, aryl or substituted aryl; or $-CONR^7R^8$ wherein $R^7$ and $R^8$ are independently hydrogen, lower alkyl, lower

alkenyl, lower alkoxyalkyl, aryl, substituted aryl, or a compatible salt-forming cation;

$Z^3$ is $-CH_2CN$; -CONHOH; -C(OH)=NOH (or its tautomer); $-CH_2COOR'$ wherein R' is hydrogen, lower alkyl, lower alkenyl, lower alkoxyalkyl, aryl or substituted aryl; or $-CONR^{7'}R^{8'}$ wherein $R^{7'}$ and $R^{8'}$ are independently hydrogen, lower alkyl, lower alkenyl, lower alkoxyalkyl, aryl or substituted aryl;

wherein $R^5$ is lower alkyl, lower alkoxy, hydroxy, lower alkanoyl, arylcarbonyl, substituted arylcarbonyl, trifluoroacetyl, lower alkylthioalkanoyl; amino, alkylamino, nitro, nitroso, or a radical having the formula:

$-COOR^9$; $-OCH_2COOR^{10}$; $-CH_2PO(OR^{1'})(OR^{2'})$; $-S(O)_mR^{11}$; $-SO-X-R^{11}$; or $-COS(O)_mR^{12}$;

wherein $R^9$ is lower alkyl, lower alkenyl, aryl, or substituted aryl; $R^{11}$ is lower alkyl, aryl or substituted aryl; X is -O- or -S-; $R^{12}$ is lower alkyl, lower alkenyl, lower alkynyl, aryl, substituted aryl, lower arylalkyl, or substituted lower arylalkyl, m is 0, 1, or 2, and $R^{1'}$, $R^{2'}$ and $R^{10}$ are independently selected from the group of substituents defined for $R^1$ hereinabove;

$R^6$ is hydrogen; lower alkyl; aryl; substituted aryl; lower arylalkyl; lower substituted arylalkyl; -COOR', wherein R' is hydrogen, lower alkyl, lower alkenyl, lower alkoxyalkyl, aryl or substituted aryl; or $-PO(OR^3)(OR^4)$ wherein $R^3$ and $R^4$ are as defined hereinabove.

The compounds of Formulae IIb - VII above are also generally known herbicidally active compounds and can be prepared by known procedures, or obvious modifications thereof (e.g. substitutions of appropriate solvents and appropriately substituted starting materials). Such compounds and procedures are, for example, described in U.S. Patents Nos. 4,035,177; 4,175,946; 4,251,258; 4,231,782; 4,322,238; 4,322,239; 4,323,387; 4,300,942; 4,300,943; U.S. Research Disclosure No. 220,001, filed July 20, 1982 (Derwent No. 73821 E/35); British Patent No. 2,090,596;

Belgian Patent No. 888001 (Derwent No. 71783 D/40); Japanese Patent No. 5 6139408 (Derwent No. 91755 D/50); Japanese Patent No. 5 7099597 (Derwent No. 62700 E/30); European Patent Application No. 39310 (Derwent No. 83914 D/46); German Patent Application No. 2,361,382 (C.A 39571e - Vol. 82, 1975); and Japanese Patent No. 5 7120595 (Derwent No. 7120595).

The oxyfluorfen-type compounds useful in the present invention can be represented by the formula:

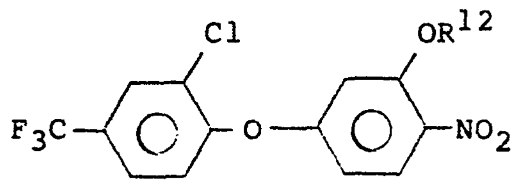

(VIII)

wherein $R^{12}$ is lower alkyl.

The compound of Formula (VIII) wherein $R^{12}$ is ethyl is especially preferred as it affords very good results and is readily available commercially under the generic name "oxyfluorfen".

The compounds of Formula (VIII) are also generally known compounds and can be prepared by known procedures.

The composition of the present invention comprises one or more glyphosate-type compounds and an amount of one or more compounds of Formula (VIII) effective to improve phytotoxic action as compared with the glyphosate-type compound <u>per se</u>. Typically, based on the two common forms of the compounds of Formula (I) and Formula (VIII), i.e. the isopropylamine salt of glyphosate and oxyfluorfen, respectively, the composition of the present invention typically contains about from 0.3 to 4, preferably about from 0.5 to 3 parts by weight of Compound VIII per part of Compound I. In terms of general mole equivalent ratios, typically about from 0.18 to 2.5, preferably 0.31 to 2, mole equivalents, based on oxyfluorfen

(i.e. Compound VIII wherein $R^{12}$ is ethyl), of Compound VIII is used per mole equivalent of glyphosate-type compound, based on glyphosate (i.e. Compound I wherein R, $R^1$ and $R^3$ are each H). Lower and higher ratios of Compound VIII to the glyphosate-type compound generally fail to produce a significant enhancement in the phytotoxic properties the glyphosate-type compound or are not cost effective and can, in the case of higher ratios of compound VIII, reduce the overall effectiveness of the glyphosate-type compound resulting in early regrowth.

The composition is preferably applied in a diluted form comprising a compatible carrier and is generally applied in the same manner as glyphosate-type herbicides and is effective against the same spectrum of broad leaf weeds and grasses.

The increased speed of phytotoxicity afforded by the present composition is most dramatic in the early growing season on young broad leaf weeds and grasses and especially on difficult-to-kill species of weeds and grasses, such as creeping beggarweed, Bermuda grass, and bahiagrass. For example, in the case of Bermuda grass, the speed of phytotoxic action is even greater than the combined phytotoxic rates of glyphosate and oxyfluorfen.

In the case of mature vegetation, the increase in speed of action afforded by the present invention is less dramatic because of the relative fast action afforded by glyphosates against mature plants.

The composition can be formulated as a liquid, solid, wettable powder, or aerosol and can be supplied as a concentrate designed for dilution prior to application or can be supplied as a ready-to-use formulation. Generally, the composition is preferably applied to the vegetation as a liquid or aerosol.

For ready-to-use applications the composition typically comprises from 0.15 to 1 wt percent, preferably 0.35 to 0.8 wt percent of active ingredients, (based on isopropylamine salt of glyphosate plus oxyfluorfen) preferably in the relative ratios prescribed

hereinabove), with the remainder being compatible carrier optionally containing small amounts of suitable additives. The composition can also be formulated as a concentrate typically containing from 1 to 100 wt percent active ingredients (i.e., glyphosate-type compound(s) plus oxyfluorfen-type compound(s) in the prescribed ratio given hereinabove) and the remainder compatible carrier optionally containing small amounts of suitable additives. Where the concentrate is formulated as a liquid it typically contains from 0.8 to 60 wt percent, preferably 1 to 55 wt percent, and more preferably, 1 to 50 wt percent, of said active ingredients and a compatible liquid carrier. Where the concentrate is supplied as a solid (e.g., powder, granules) the composition can be 100 wt percent (typically 2 to 100 wt percent) of said active ingredients or can optionally contain a compatible solid carrier (preferably water soluble or water flowable).

The term "compatible carrier" refers to carrier materials which are compatible with the herbicidally active ingredients and which do not significantly adversely affect their herbicidal properties save to dilute it.

The composition can also contain small amounts, typically less than 1 to 5 wt percent, of various optional additives such as wetting agents, stabilizers, emulsifiers and solvents. Examples of such additives and general glyphosate formulations are, for example, described in U.S. Patent No. 4,315,765.

Suitable liquid carriers which can be used, include, for example, water, organic solvents, for example, benzene, toluene, kerosene, diesel fuel, fuel oil, and petroleum naphtha.

Solid carriers can also be used but are generally less convenient than liquid carriers. Suitable solid carriers include, for example, fine clays, walnut shell flour, cottonseed hulls, wheat flour and wood flour.

The present invention can also be applied as an aerosol containing the glyphosate-type compound(s) and Compound(s) VIII in the prescribed ratio along with a suitable aerosol carrier, such as halogenated alkanes and optional additives.

For home and garden use, the composition is preferably applied as a liquid formulation containing from 0.1 to 0.5, more preferably 0.2 to 0.4, weight percent of the glyphosate-type compound (based on the isopropylamine salt of glyphosate) and from 0.05 to 0.5, more preferably 0.15 to 0.4, weight percent of Compound VIII, based on oxyfluorfen. Also, for both home and garden use and also for larger scale use where long residual control is desired, we have found that best results, in terms of an advantageous combination of increased speed of phytotoxic and longer residual control of both grasses and broad-leaf plants are obtained using a glyphosate-type compound concentration of about 0.25 wt percent (based on the glyphosate isopropylamine salt) and a Compound VIII concentration of about 0.25 wt percent (based on oxyfluorfen). Preferably, a salt of glyphosate (e.g. the isopropylamine salt) and oxyfluorfen are used as both and are readily available commercially and afford excellent results.

Based on mole equivalents of glyphosate-type compound and mole equivalents of Compound VIII, the liquid formulations preferably contain from 0.004 to 0.022, more preferably 0.009 to 0.018 gram mole equivalents, based on glyphosate isopropylamine salt, of the glyphosate-type compound(s) and from 0.001 to 0.014, more preferably 0.004 to 0.011, gram mole equivalents, based on oxyfluorfen, of the oxyfluorfen compound(s) per kilogram of formulation. Very good results are obtained using about 0.011 mole equivalents, based on glyphosate isopropylamine salt, of glyphosate-type compound and about 0.007 gram mole equivalents, based on oxyfluorfen, of the oxyfluorfen-type compound per kilogram of formulation. The remainder of the liquid formulation is liquid carrier

or solvent optionally containing suitable additives as explained above. Water is generally the preferred carrier when water-soluble forms of the active compounds are used. Also, it is desirable to include a surfactant.

The composition can also be formulated as an aerosol for home and garden applications having about the same concentration ranges of the glyphosate-type compound(s) and oxyfluorfen-type compound(s) as the liquid formulations described above. The formulation is then applied to the foliage and/or stems of the vegetation, for example, by simple spraying. As in the case of conventional home and garden glyphosate formulations, best results are obtained when the foliage is thoroughly wetted with the formulation.

The aforementioned compositions of the invention can be conveniently prepared by simple mixing or blending of the ingredients.

## Definitions

As used herein, the following terms have the following meanings unless expressly stated to the contrary.

The term "Compounds I and Ia or I-VII" refers to the compounds defined by Formulae I and Ia or I-VII, respectively, given hereinabove, and includes mixtures thereof.

The term "Compound VIII" refers to the compounds defined by Formula VIII, given hereinabove, and includes mixtures thereof.

The term "alkyl" refers to both straight-chained and branch-chained alkyl groups. The term "lower alkyl" refers to alkyl groups having 1 through 6 carbon atoms and includes methyl, ethyl, isopropyl, t-butyl, pentyl and hexyl.

The term "alkylene" refers to the group $-(CH_2)_n-$.

The term "alkenyl" refers to the unsaturated counterpart of alkyl having one or two double bonds..

The term "lower alkenyl" refers to alkenyl having 2 to 6 carbon atoms.

The term "alkoxy" refers to the group $R^1O$- wherein $R^1$ is alkyl. The term "lower alkoxy" refers to alkoxy having 1 to 6 carbon atoms.

The term "alkoxyalkyl" refers to the group R'OR"- wherein R' and R" are each independently alkyl.

The term "lower alkoxyalkyl" refers to the group R'OR"- wherein R' and R" are each lower alkyl and having a total of from 2 to 8 carbon atoms. Typically R" is methyl.

The term "lower alkylamine" refers to the group $R^1R^2N$- wherein $R^1$ is lower alkyl and $R^2$ is hydrogen or lower alkyl.

The term "aryl" refers to aryl groups having 6 to 10 carbon atoms and includes phenyl and naphthyl. The preferred aryl group is phenyl.

The term "substituted aryl" refers to aryl groups having 1 to 3, preferably 1 or 2, substituents independently selected from the group of lower alkyl, lower alkoxy, halo, trifluoromethyl, cyano, nitro and hydroxy. The preferred substituted aryl group is substituted phenyl.

The term "lower arylalkyl" refers to the group ArR'- wherein Ar is aryl and R' is lower alkyl. Preferably, R' is methyl or ethyl and/or Ar is phenyl.

The term "lower substituted lower arylalkyl" refers to the group A'rR'- wherein A'r is substituted aryl and R' is lower alkyl.

The term "alkanoyl" refers to the group

O<br>
‖<br>
R'C-

wherein R' is alkyl.

The term "lower alkanoyl" refers to the group

O<br>
‖<br>
R'C-

wherein R' is lower alkyl.

The term "arylcarbonyl" refers to the group

$$Ar'\overset{O}{\overset{|}{C}}-$$

wherein Ar is aryl.

The term "substituted arylcarbonyl" refers to the group

$$Ar'\overset{O}{\overset{\shortparallel}{C}}-$$

wherein Ar' is substituted aryl.

The term "lower alkylthioalkanoyl" refers to the group

$$R'SR''\overset{O}{\overset{\shortparallel}{C}}-$$

wherein R' and R'' are independently lower alkyl. Preferably, the lower alkylthioalkanoyl has from 2 through 8 carbon atoms.

The invention is illustrated by the following non-limiting Examples.

Example 1

In this example, the formulations of the present invention were field-tested for their speed of phytotoxicity against Bermuda grass (Cynodon dactylon) and pennywort (Hydrocotyl). Side-by-side comparison tests were also conducted at the same time against the same plant species using formulations containing only the glyphosate compound or only the oxyfluorfen compound at the same concentration. A comparison formulation was also run at the same time containing combinations of glyphosate isopropylamine with the diphenoxy ether herbicide bifenox. Three replicate one square foot plots of the subject plants were tested for each weed and grass species per formulation. An untreated plot sprayed only with the carrier solution without the herbicidal ingredients was also run at the same time for each species as a check.

The formulations were prepared by diluting standard commercial 41%, by weight, solutions of the isopropylamine salt of glyphosate (sold under the Trademark "Roundup" by the Monsanto Company of St. Louis, Missouri, U.S.A.) and/or a standard commercial 23.5%, by weight, solution of oxyfluorfen (sold under the Trademark "Goal" by the Rohm and Haas Company of Philadelphia, Pennsylvania, U.S.A.) or a 40%, by weight, solution of bifenox (i.e., methyl 5-(2,4-dichlorophenoxy)-2-nitrobenzoate) sold under the Trademark "Modown" by Rhone-Poulenc, Inc. with the appropriate amount of water to yield the concentrations indicated in the tables set forth below.

Prior to spraying the plots were clipped to 2 inches, the formulations were then applied to the foliage of the test plant with a trigger sprayer to give thorough coverage usng 25 ml of solution for each test plot. These tests were conducted in the state of Florida and were started in early April. At the time the formulations were applied, the temperature was about 20°C to 23°C with a relative humidity of 50°C to 60°C. The first rain occurred two days after the spraying.

The plants were periodically observed and rated for phytotoxic effects and physiological response to the treatment. A rating scale of 0 to 100 was used, 0 representing no phytotoxicity and 100 representing complete kill. The results are reported in Table 1 hereinbelow as the average of the three replicates.

TABLE 1

| No. | Treatment | Concentration Weight % | % Broad Leaf Weed Control: Bermuda Grass 4 | 7 | 14 | 21 | 35 | Pennywort 4 | 7 | 14 | 21 | 35 days**** |
|---|---|---|---|---|---|---|---|---|---|---|---|---|
| 1. | G | .12 | 0 | 8 | 30 | 38 | 28 | 0 | 13 | 17 | 25 | 27 |
| 2. | G | .5 | 2 | 25 | 82 | 97 | 99 | 7 | 35 | 38 | 53 | 72 |
| 3. | O | .06 | 0 | 8 | 5 | 0 | 0 | 0 | 3 | 7 | 0 | 0 |
| 4. | O | .12 | 0 | 8 | 8 | 0 | 0 | 0 | 5 | 13 | 3 | 0 |
| 5. | O | .25 | 10 | 22 | 25 | 18 | 0 | 3 | 5 | 23 | 15 | 0 |
| 6. | O | .5 | 32 | 75 | 62 | 45 | 25 | 2 | 8 | 25 | 20 | 7 |
| 7. | B*** | .06 | 0 | 0 | 0 | 0 | 0 | 0 | 0 | 0 | 0 | 0 |
| 8. | B | .12 | 0 | 0 | 0 | 0 | 0 | 0 | 0 | 0 | 0 | 0 |
| 9. | B | .25 | 0 | 0 | 0 | 0 | 0 | 0 | 0 | 0 | 0 | 0 |
| 10. | B | .5 | 0 | 0 | 0 | 0 | 0 | 0 | 0 | 0 | 0 | 0 |
| 11. | G + O | .12+.06 | 0 | 40 | 88 | 90 | 91 | 0 | 17 | 37 | 35 | 40 |
| 12. | G + O | .12+.12 | 25 | 58 | 97 | 97 | 93 | 8 | 20 | 38 | 35 | 35 |
| 13. | G + O | .12+.25 | 32 | 83 | 99 | 99 | 96 | 5 | 20 | 37 | 38 | 45 |
| 14. | G + O | .12+.5 | 32 | 85 | 100 | 100 | 98 | 7 | 22 | 47 | 47 | 55 |
| 15. | G + O | .5+.06 | 0 | 20 | 87 | 95 | 98 | 0 | 15 | 38 | 55 | 77 |
| 16. | G + O | .5+.12 | 0 | 30 | 94 | 99 | 99 | 0 | 17 | 52 | 60 | 83 |
| 17. | G + O | .5+.25 | 20 | 45 | 99 | 100 | 100 | 7 | 22 | 58 | 73 | 83 |
| 18. | G + O | .5+.5 | 28 | 78 | 99 | 100 | 99 | 7 | 27 | 50 | 60 | 77 |
| 19. | G + B | .12+.06 | 0 | 0 | 32 | 27 | 33 | 0 | 0 | 13 | 20 | 33 |

TABLE 1 (Cont'd)

| No. | Treatment | Concentration Weight % | % Broad Leaf Weed Control | | | | | | | | | | |
|---|---|---|---|---|---|---|---|---|---|---|---|---|---|
| | | | Bermuda Grass | | | | | Pennywort | | | | | |
| | | | 4 | 7 | 14 | 21 | 35 | 4 | 7 | 14 | 21 | 35 | days**** |
| 20. | G + B | .12+.12 | 0 | 0 | 30 | 28 | 20 | 0 | 0 | 17 | 23 | 27 | |
| 21. | G + B | .12+.25 | 0 | 0 | 28 | 30 | 38 | 0 | 0 | 15 | 23 | 30 | |
| 22. | G + B | .12+.5 | 0 | 0 | 27 | 40 | 50 | 0 | 0 | 17 | 25 | 45 | |
| 23. | G + B | .5+.06 | 0 | 5 | 57 | 97 | 99 | 0 | 3 | 33 | 37 | 75 | |
| 24. | G + B | .5+.12 | 0 | 8 | 82 | 98 | 98 | 0 | 13 | 47 | 57 | 82 | |
| 25. | G + B | .5+.25 | 0 | 15 | 87 | 99 | 100 | 0 | 18 | 47 | 58 | 82 | |
| 26. | G + B | .5+.5 | 0 | 23 | 94 | 100 | 100 | 0 | 23 | 57 | 62 | 87 | |

27. not treated*1

* Compound G is the monoisopropylamine salt of glyphosate

** Compound O is the oxyfluorfen

*** Compound B is bifenox

**** Days after treatment; treatment date is 0

Each square foot replicate plot was sprayed with 25 ml of formulation

*1 - Sprayed only with carrier formulation

As can be seen from Table 1, the glyphosate plus oxyfluorfen formulations of the present invention exhibit increased speeds of phytotoxicity over glyphosate alone at the same concentration. This is shown by the increased phytotoxicity shown in the 4- to 14-day period after application as compared with glyphosate alone. The compositions of the present invention also exhibited excellent residual control.

The increase in speed of phytotoxicity is perhaps more surprising in the case of grasses since glyphosate is well recognized to already have exceptional activity against grasses and lesser activity against broad leaf weed. Whereas oxyfluorfen is known to have better activity against broad leaf weed and only relatively modest activity against grasses. Moreover, in the case of difficult-to-control Bermuda grass, at the low glyphosate dosage (i.e., 0.12 weight percent glyphosate) this increase in speed of phytotoxicity and phytotoxicity effectiveness was greater than the result obtained by the raw summation of the phytotoxicity for glyphosate and oxyfluorfen at those concentrations and times.

Claims:

1. A herbicidal composition comprising:

(a) a phytotoxic effective amount of at least one glyphosate-type herbicide selected from (i) compounds having the formula:

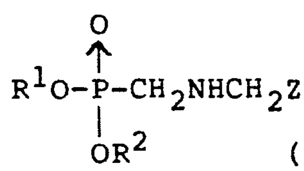 (I) or 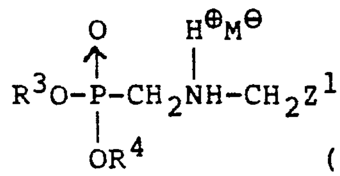 (Ia)

wherein Z is cyano, or -COOR wherein R is hydrogen, lower alkyl, lower alkoxyalkyl, lower alkenyl, aryl, having 6 through 10 carbon atoms, or substituted aryl having 6-10 ring carbon atoms and having 1 through 3 substituents independently selected from the roup of lower alkyl, lower alkoxy, halo, trifluoromethyl, nitro, and cyano; or a compatible salt-forming cation;

$Z^1$ is cyano or -COOR' wherein R' is hydrogen, lower alkyl, lower alkoxyalkyl, lower alkenyl, aryl having 6 through 10 carbon atoms, or substituted aryl as defined above;

$R^1$ and $R^2$ are independently hydrogen, lower alkyl, aryl having 6 through 10 carbon atoms, substituted aryl, as defined above, biphenyl, or a compatible salt-forming cation;

$R^3$ and $R^4$ are independently hydrogen, lower alkyl, aryl having 6 through 10 carbon atoms, or substituted aryl as defined above; and

M is a compatible cation; and

(ii) compounds which are metabolized by green plants to the phytotoxic functionality of the compounds of Formula I and Ia;

(b) at least one oxyfluorfen-type herbicide selected from compounds having the general formula:

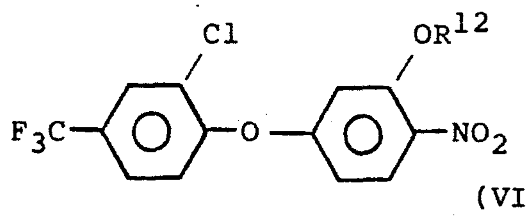

(VIII)

wherein $R^{12}$ is lower alkyl,

in an amount effective to increase the speed of phytotoxic action of said glyphosate-type herbicide; and

(c) a compatible carrier.

2. A composition as claimed in Claim 1, wherein the composition comprises the glyphosate-type herbicide and the oxyfluorfen-type herbicide in a ratio of from 0.18 to 2.5 mole equivalents, based on oxyfluorfen, of said oxyfluorfen-type herbicide per mole equivalent, based on glyphosate, of said glyphosate-type herbicide.

3. A composition as claimed in Claim 1, wherein said composition is in a liquid form and contains from 0.004 to 0.022 gram mole equivalents, based on glyphosate, of said glyphosate-type herbicide and from 0.001 to 0.014 gram mole equivalents, based on oxyfluorfen, of said oxyfluorfen-type herbicide per kilogram of said composition.

4. A composition as claimed in Claim 1, 2 or 3, wherein said glyphosate-type herbicide is selected from the compounds having the Formula I or Ia.

5. A composition as claimed in any preceding claim, wherein said glyphosate herbicide is selected from the compounds of Formula I wherein Z is -COOR, wherein R is hydrogen, lower alkyl, lower alkenyl, lower alkoxyalkyl or a compatible salt-forming cation; and $R^1$ and $R^2$ are independently hydrogen, lower alkyl, phenyl, substituted phenyl having 1 or 2 substituents selected from alkyl, alkoxy and halo, or a compatible salt-forming cation.

6. A composition as claimed in Claim 5, wherein in said glyphosate-type herbicide R is hydrogen or a compatible salt-forming cation and $R^1$ and $R^2$ are independently hydrogen or a compatible salt-forming cation.

7. A composition as claimed in any preceding claim, where said glyphosate-type herbicide is a lower alkylamine salt of glyphosate, or a mixture thereof.

8. A composition as claimed in Claim 7, wherein said glyphosate-type herbicide is the isopropylamine salt of glyphosate.

9. A composition as claimed in any preceding claim, wherein said oxyfluorfen-type herbicide is oxyfluorfen.

10. A composition as claimed in any one of Claims 1 to 6, wherein said glyphosate-type herbicide is selected from trialkylsulfonium and trialkylsulfoxium salts of glyphosate and mixtures thereof.

11. A composition as claimed in Claim 10, wherein said glyphosate-type herbicide is selected from the trimethylsulfonium and trimethylsulfoxium salts of glyphosate and mixtures thereof.

12. A composition as claimed in Claim 11, wherein the oxyfluorfen-type herbicide is sodium oxyfluorfen.

13. A composition as claimed in any preceding claim, wherein said carrier is a liquid.

14. A composition as claimed in Claim 1 or 2, wherein said carrier is an aerosol carrier.

15. A herbicidal composition comprising from 0.2 to 0.4 weight percent of the isopropylamine salt of glyphosate; from 0.15 to 0.4 weight percent of oxyfluorfen in a weight ratio of from 0.5 to 3 parts of said oxyfluorfen per part of said glyphosate salt; and a compatible liquid carrier.

16. A composition as claimed in Claim 15, wherein the composition comprises about 0.25 weight percent of said isopropylamine salt of glyphosate and about 0.25 weight percent of said oxyfluorfen.

17. A herbicide concentrate composition comprising a glyphosate-type herbicide as defined in Claim 1 and an oxyfluorfen-type herbicide as defined in Claim 1, said composition containing from 0.19 to 2.5 mole equivalents, based on oxyfluorfen, of said oxyfluorfen-type herbicide

per mole equivalent, based on glyphosate, of said glyphosate-type herbicide.

18. A composition as claimed in Claim 17, wherein said composition contains from 0.31 to 2 mole equivalents, based on oxyfluorfen, of said oxyfluorfen-type herbicide, per mole equivalent, based on glyphosate, of said glyphosate-type herbicide.

19. A composition as claimed in Claim 17 or 18, wherein said composition is in liquid form and comprises a sum total of from 0.8 to 60 weight percent of said glyphosate-type herbicide and said oxyfluorfen-type herbicide.

20. A composition as claimed in Claim 17 or 18, wherein said composition is a particulate solid and comprises a sum total of from 2 to 100 weight percent of said glyphosate-type herbicide and said oxyfluorfen-type herbicide.

21. A method of controlling and providing residual control of broad-leaf plants and grasses which comprises contacting the foliage of such plants and grasses with a phytotoxic effective amount of a herbicidal composition as claimed in any one of Claims 1 to 16.

European Patent Office

# EUROPEAN SEARCH REPORT

0143547 Application number

EP 84 30 7319

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,Y | WO-A-84 03 607 (CHEVRON RESEARCH CO.)<br>* Page 11, lines 20-34; claims *<br>--- | 1-21 | A 01 N 57/20<br>A 01 N 57/22<br>//(A 01 N 57/22<br>33/22<br>A 01 N 57/20<br>33/22) |
| D,A | US-A-3 799 758 (J. FRANZ)<br>* Column 8, line 12; column 12, line 11 - column 15, line 13; claims *<br>--- | 1,4-8,13,14,21 | |
| A | US-A-4 046 798 (H.BAYER et al.)<br>* Column 5, line 47 - column 6, line 43; column 6, line 62 - column 8, line 68; table 1; examples 2-6 * | 1,9,13 14,21 | |
| D | & US-A-4 063 929<br>--- | | **TECHNICAL FIELDS SEARCHED (Int. Cl.4)**<br>A 01 N |
| A | EP-A-0 053 871 (STAUFFER CHEMICAL CO.)<br>* Page 12, lines 1-11; page 13, line 18 - page 14, line 16; claims * | 1,4-6 10,11,13,14,21 | |
| D | & US-A-4 315 765 (G. LARGE)<br>----- | | |

The present search report has been drawn up for all claims

| Place of search | Date of completion of the search | Examiner |
|---|---|---|
| THE HAGUE | 21-02-1985 | FLETCHER A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document